# FASCICULE DE BREVET EUROPEEN

(11) **EP 0 873 486 B1**
(45) Date de publication et mention de la délivrance du brevet: **23.01.2002**
(21) Numéro de dépôt: 96939960.9
(22) Date de dépôt: 21.11.1996
(51) Int. Cl.: F16L 19/02, F17C 13/04

(54) **ELEMENT DE RACCORD TUBULAIRE**
ROHRFÖRMIGES VERBINDUNGSELEMENT
TUBULAR COUPLING ELEMENT

(30) Priorité: 23.11.1995 FR 9514196
(43) Date de publication de la demande: 28.10.1998
(73) Titulaire: Compagnie Industrielle de Filtration et d'Equipement Chimique (CIFEC), 75016 Paris (FR)
(72) Inventeur: TALBOT, Albert, F-92100 Boulogne-Billancourt (FR); DERREUMAUX, Luc, F-92200 Neuilly-sur-Seine (FR)
(74) Mandataire: de Saint-Palais, Arnaud Marie
(86) Numéro de dépôt international: FR9601845
(87) Numéro de publication internationale: WO9719287

(56) Documents cités:
- FR-A- 2 122 370
- US-A- 4 872 641
- US-A- 5 282 493

## Description

La présente invention a pour objet un élément de raccord tubulaire destiné à être serré sur un nez de raccordement tubulaire, avec interposition d'un joint d'étanchéité, en vue d'obtenir une connexion étanche entre ledit élément et ledit nez.

Elle s'applique notamment, mais non exclusivement, aux éléments de raccord équipant les étriers utilisés pour la connexion d'un circuit de distribution de gaz sur la tête d'une bouteille de gaz sous pression.

Elle convient plus particulièrement aux étriers servant au montage des chlorodétendeurs sur des bouteilles de chlore comprenant habituellement un corps cylindrique prolongé d'une tête coaxiale munie d'un robinet équipé d'un nez de raccordement transversal.

Habituellement, ces étriers comprennent deux montants parallèles reliés entre eux par deux traverses perpendiculaires de manière à former un cadre rigide délimitant un espace sensiblement rectangulaire.

L'un des deux montants, en forme de platine, est muni d'un perçage central dans lequel s'engage un élément de raccord solidaire du circuit de distribution. Cet élément de raccord est destiné à être serré avec étanchéité sur le nez de raccordement de la bouteille.

Le deuxième montant est équipé de moyens de serrage faisant habituellement intervenir un coulisseau guidé par deux traverses et pouvant être déplacé sous l'action d'une tige filetée qui se visse dans un perçage traversant taraudé réalisé dans ce deuxième montant, à l'opposé de l'élément de raccord.

Cet étrier est dimensionné de manière à ce qu'en position desserrée, la tête de la bouteille puisse venir s'engager entre le premier montant et le coulisseau, l'élément de raccord étant placé dans l'axe du nez de raccordement de la bouteille.

La connexion du circuit de distribution à la bouteille s'obtient alors en disposant un joint d'étanchéité entre le nez et l'élément de raccord puis en vissant la tige filetée jusqu'à ce que le joint se trouve comprimé à la pression d'étanchéité souhaitée.

Lorsque le gaz véhiculé est du chlore, le joint d'étanchéité utilisé est habituellement réalisé en plomb.

Bien entendu, lors de chaque remplacement de bouteille, l'étrier doit être desserré puis resserré sur la nouvelle bouteille et parallèlement le joint en plomb doit être changé.

Ces opérations doivent être réalisées avec beaucoup d'attention pour éviter toute possibilité de fuite de gaz (lequel est hautement toxique).

Or, il s'avère que le point le plus délicat de ces manipulations consiste en la mise en place du joint et son maintien en position jusqu'à ce qu'il se trouve serré et donc immobilisé entre le nez de la bouteille et l'élément de raccord.

On constate en pratique que cette mise en place est malaisée, s'effectue généralement en aveugle et ne garantit pas l'obtention d'une bonne coaxialité du joint et donc d'une bonne étanchéité. En outre, au cours de la pose, le joint peut être sujet à des détériorations et/ou des déformations risquant également d'affecter l'étanchéité.

Une autre cause de fuite résulte du fait que lors de l'extraction d'un joint usagé, une fraction de ce joint peut rester collée sur la portée d'étanchéité de l'élément de raccord en engendrant des déformations et des défauts d'application des joints utilisés ultérieurement.

L'invention a donc plus particulièrement pour but de supprimer ces inconvénients.
Elle propose à cet effet un élément de raccord tubulaire présentant une portée d'étanchéité radiale destinée à être serrée sur un nez de raccordement tubulaire, avec interposition d'un joint d'étanchéité, en vue d'obtenir une connexion étanche entre ledit élément et ledit nez.

Selon l'invention, cet élément de raccord est caractérisé en ce qu'il comprend un porte-joint mobile dans un plan parallèle à ladite portée d'étanchéité de manière à pouvoir occuper deux positions successives, à savoir :
- une position décentrée par rapport à l'axe de l'élément de raccord de manière à pouvoir insérer un joint dans le porte-joint, ou l'en extraire, en dehors de l'espace situé en regard de ladite portée d'étanchéité, et
- une position centrée dans laquelle le joint préalablement inséré dans le porte-joint, est disposé contre la portée d'étanchéité, coaxialement à l'élément de raccord.

Avantageusement, le porte-joint pourra être monté pivotant sur l'élément de raccord autour d'un axe parallèle à l'axe dudit élément.

Dans ce cas, le porte-joint pourra se présenter sous la forme d'un élément annulaire plat dont une face latérale, plane, s'étend sensiblement dans le plan de la susdite portée d'étanchéité tandis que l'orifice central, de forme cylindrique, présente un diamètre sensiblement égal au diamètre extérieur du joint.

Un mode d'exécution de l'invention sera décrit ci-après, à titre d'exemple non limitatif, avec référence aux dessins annexés dans lesquels :
- La figure 1 est une vue de dessus schématique illustrant le principe de montage d'un étrier de chloromètre sur la tête d'une bouteille de chlore.
- La figure 2 montre en coupe axiale un élément de raccord porté par l'étrier représenté sur la figure 1.
- La figure 3 est une vue de face de l'élément de raccord muni de ses moyens de support et de centrage du joint.

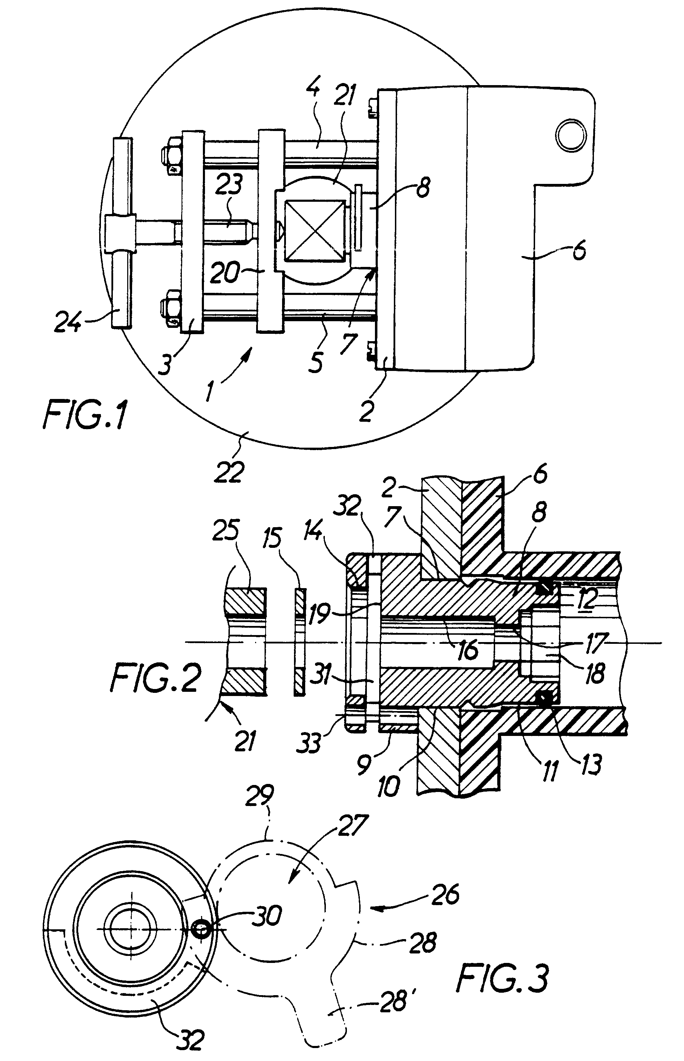

Dans l'exemple représenté sur la figure 1, l'étrier 1 se compose de deux montants 2, 3 et de deux traverses 4, 5 formant un cadre rigide délimitant un espace rectangulaire.

Le montant 2 se présente sous la forme d'une platine venant se visser sur le boîtier 6 d'un chloromètre servant au dosage du chlore dans une installation de traitement de l'eau.

Il comprend un perçage central 7 dans lequel s'engage, de façon étanche, un élément de raccord 8 représenté en détail sur la figure 2. Cet élément de raccord 8 présente une forme tubulaire sensiblement cylindrique. Il présente une surface cylindrique extérieure étagée à trois niveaux comportant successivement :
- un premier étagement 9 qui constitue la partie du raccord 8 venant en saillie dans le volume délimité par l'étrier 1 ;
- un deuxième étagement 10 dont le diamètre, inférieur à celui du premier étagement 9, est sensiblement égal à celui du perçage 7 dans lequel il vient s'engager, la jonction entre ces deux premiers étagements 9, 10 étant constituée par un décrochement radial servant de butée axiale ;
- un troisième étagement 11 de diamètre inférieur au deuxième, ce troisième étagement étant destiné à venir s'engager avec étanchéité dans une cavité cylindrique 12 du chloromètre ; ce troisième étagement 11 est raccordé au deuxième par une portion tronconique et comprend une gorge annulaire servant à recevoir un joint torique d'étanchéité 13.

La surface cylindrique intérieure de l'élément de raccord comprend trois niveaux d'alésage, à savoir :
- un premier niveau d'alésage 14 dont le diamètre est sensiblement égal au diamètre extérieur d'une rondelle d'étanchéité 15, ce premier niveau d'alésage s'étendant sur une fraction de la longueur du premier étagement 9 ;
- un deuxième niveau d'alésage 16 de diamètre au plus égal au diamètre intérieur de la rondelle d'étanchéité 15; ce deuxième niveau d'alésage forme avec le premier un décrochement radial qui constitue la portée d'étanchéité 19 et s'étend jusqu'au niveau de la jonction entre le deuxième 10 et le troisième 11 étagements.
- un troisième niveau d'alésage 17 de diamètre inférieur au premier, qui s'étend sur une partie du troisième étagement 11 et débouche à l'extérieur par l'intermédiaire d'une portion allant en s'évasant 18.

Les deux traverses 4, 5 consistent en des tiges cylindriques servant au guidage d'un coulisseau 20 destiné à assurer le serrage de l'étrier 1 sur la tête 21 de la bouteille 22. A cet effet, le coulisseau 20 comprend deux perçages transversaux parallèles à travers lesquels passent respectivement les deux traverses 4, 5.

L'action de serrage exercée par le coulisseau 20 est commandée par une tige filetée 23 dont une extrémité est axialement solidaire du coulisseau 20 mais est libre en rotation par rapport à celui-ci. Cette tige filetée 23 vient se visser dans un perçage traversant taraudé réalisé dans la partie centrale du montant 3, sensiblement coaxialement à l'élément de raccord 8. Son entraînement en rotation s'effectue à la main grâce à un levier de manoeuvre transversal 24.

Comme précédemment mentionné, l'assemblage de l'étrier 1 sur une bouteille de gaz 22 s'obtient en engageant la tête 21 de la bouteille dans le passage de l'étrier compris entre le coulisseau 20 et le montant 2, la tige filetée 23 étant à l'état dévissé, le nez 25 de la tête 21 étant disposé coaxialement à l'élément de raccord 8. On procède ensuite au vissage de la vis 23 de manière à ce que, dans un premier temps, le nez 25 s'engage dans le premier étagement d'alésage 14, puis vienne, en fin de serrage, comprimer le joint 15 présent dans cet étagement contre la portée d'étanchéité 19. Dans cette dernière position, la connexion étanche du nez 25 et de l'élément de raccord 8 est établie et le robinet de la bouteille 22 peut donc être ouvert.

Conformément à l'invention, l'élément de raccord 8 est muni d'un porte-joint mobile 26 permettant de faciliter l'insertion et le positionnement précis du joint 15 contre la portée d'étanchéité 19.

Tel que représenté sur la figure 3, ce porte-joint 26 présente une forme annulaire plate dont le passage central 27 cylindrique ou légèrement conique présente un diamètre sensiblement égal au diamètre extérieur du joint 15.

La forme périphérique de ce porte-joint 26 est constituée par la jonction de deux bordures circulaires coaxiales de diamètres différents se raccordant au niveau de deux décrochements radiaux de manière à limiter la rotation ou basculement du porte-joint, à savoir :
- une bordure circulaire 28 dont le diamètre est sensiblement égal au diamètre extérieur du premier étagement 9 de l'élément de raccord 8 et qui s'étend sur environ 210° ;
- une bordure circulaire de plus petit diamètre 29 qui s'étend sur environ 150°.

La bordure circulaire de plus grand diamètre 28 comprend, à l'opposé de la bordure circulaire de plus petit diamètre 29, un prolongement 28' qui constitue un levier de manoeuvre.

Le porte-joint 26 comprend par ailleurs, au niveau de la jonction entre les deux secteurs circulaires mais du côté de la bordure 28, un perçage latéral traversant servant de palier à un axe d'articulation 30.

Il est destiné à venir s'engager dans une fente transversale 31 de même épaisseur et de forme sensiblement complémentaire réalisée dans le premier étagement 9 de l'élément de raccord 8, dans une région directement adjacente à la portée d'étanchéité 19.

Cette fente transversale sépare donc le premier étagement 9 en deux parties reliées entre elles par une liaison 32 en forme de secteur annulaire complémentaire à la bordure circulaire 29.

Par ailleurs, le porte-joint est monté basculant dans la fente grâce à l'axe d'articulation 30 qui s'engage dans un perçage 33 réalisé dans l'élément de raccord 8 parallèlement à son axe longitudinal. Ce perçage 33 est situé en un emplacement tel que le porte-joint est coaxial à l'élément de raccord lorsqu'il occupe une position totalement engagée dans la fente 31.

Avantageusement, l'axe d'articulation 30 pourra consister en une vis sans tête dont l'extrémité filetée vient se visser dans le fond taraudé du perçage 33.

En vue de recevoir un joint d'étanchéité, le porte-joint 26 doit être placé dans la position d'insertion indiquée sur la figure 3 en le faisant basculer autour de l'axe 30, l'étrier 1 se trouvant en position desserrée.

Dans cette position, l'orifice central 27 est totalement situé en dehors de la fente, de sorte qu'il est très facile d'y introduire un joint d'étanchéité 19 (présentant de préférence une épaisseur égale à celle du porte-joint 26).

Le porte-joint 26, muni de ce joint 15 peut être alors rabattu en sens inverse jusqu'à ce qu'il occupe une position totalement engagée dans la fente 31. Dans cette position, la bordure circulaire 29 du porte-joint 26 vient en appui sur la liaison en forme de secteur annulaire 32.

Dans cette position, le joint 15 se trouve appliqué et parfaitement centré sur la portée d'étanchéité 19.

L'étrier 1 peut être alors resserré sur la tête 21 de la bouteille 22 de manière à ce que le nez 25 vienne comprimer le joint 15 en assurant l'étanchéité recherchée.

Il convient de noter que lorsque le joint est introduit dans son logement en partie supérieure du porte-joint basculant, il ne peut plus tomber ou se déplacer, ce qui engendrerait un défaut d'étanchéité, étant alors mal centré. Lors du basculement du porte-joint, le joint est d'abord retenu par les portées de la fente d'introduction, puis, lorsqu'il est en place, il est retenu latéralement par la surface annulaire plate du nez 25, par les parois du logement central 27 de la pièce pivotante 29 et enfin par le raccord 8.

L'extraction du joint usagé s'effectue ensuite par un processus inverse. Un avantage de cette solution consiste en ce que lors de son basculement vers la position d'insertion/éjection, le porte-joint 26 effectue un balayage de la portée d'étanchéité 19.
Ce balayage garantit qu'aucun fragment de joint 15 n'est resté collé sur ladite portée. Il se répète ensuite lors de la mise en place d'un nouveau joint, de sorte qu'on est totalement assuré qu'aucune aspérité n'est présente sur la portée d'étanchéité 19.

Un processus de balayage analogue se produit également au niveau des deux faces latérales du joint 15, de sorte qu'on est assuré que l'étanchéité sera obtenue dans les meilleures conditions possibles.

## Revendications

1. Elément de raccord tubulaire (8) présentant une portée d'étanchéité radiale (19) destinée à être serrée sur un nez de raccordement tubulaire (25), avec interposition d'un joint d'étanchéité (15) en vue d'obtenir une connexion étanche entre ledit élément (8) et ledit nez (25),
**caractérisé en ce qu'**il comprend un porte-joint (26) mobile dans un plan parallèle à ladite portée d'étanchéité (19) de manière à pouvoir occuper deux positions successives, à savoir :
- une position décentrée par rapport à l'axe de l'élément de raccord (8) de manière à pouvoir insérer un joint (15) dans ledit porte-joint (26) ou de l'en extraire, en dehors de l'espace situé en regard de ladite portée d'étanchéité (19), et
- une position centrée dans laquelle le joint (15), préalablement inséré, est disposé contre la portée d'étanchéité (19) coaxialement à l'élément de raccord (8).

2. Elément de raccord selon la revendication 1, **caractérisé en ce que** le porte-joint (26) est monté pivotant autour d'un axe (30) parallèle à l'axe dudit élément (8) et solidaire de ce dernier.

3. Elément de raccord selon la revendication 2, **caractérisé en ce que** le porte-joint (26) se présente sous la forme d'un élément annulaire plat dont une face latérale, plane, s'étend sensiblement dans le plan de la susdite portée d'étanchéité (19), tandis que l'orifice central (27) est conformé de manière à contenir au moins partiellement le joint (15).

4. Elément de raccord selon la revendication 3, **caractérisé en ce que** le joint d'étanchéité (15) présente la forme d'une rondelle à bords cylindriques et **en ce que**, dans ce cas, l'orifice central (27) de forme cylindrique présente un diamètre sensiblement égal au diamètre extérieur du joint (15).

5. Elément de raccord selon la revendication 4, **caractérisé en ce que** la rondelle d'étanchéité (15) présente une épaisseur au plus égale à celle du porte-joint (26).

6. Elément de raccord selon l'une des revendications précédentes,
**caractérisé en ce qu'**il présente une surface cylindrique intérieure à au moins deux niveaux d'alésage, à savoir un premier niveau (14) dont le diamètre est sensiblement égal au diamètre extérieur du joint d'étanchéité (15) et un deuxième niveau (16) de diamètre inférieur au premier, qui est raccordé à ce dernier par un décrochement radial qui constitue la portée d'étanchéité (19) et **en ce que** le porte-joint (26) s'engage dans une fente transversale (31) de même épaisseur réalisée dans l'élément de raccord (8), dans une région directement adjacente à la portée d'étanchéité (19).

7. Elément de raccord selon l'une des revendications précédentes,
**caractérisé en ce qu'**il est disposé dans l'orifice central d'un premier montant (2) d'un étrier (1) utilisé pour la connexion d'un circuit de distribution de gaz sur la tête (21) d'une bouteille de gaz sous pression (22).

8. Elément de raccord selon la revendication 7, **caractérisé en ce que** l'étrier (2) comprend un cadre rigide rectangulaire comprenant deux montants (2, 3) et deux traverses (4, 5) ainsi qu'un coulisseau (20) guidé par les deux traverses (4, 5) et dont les déplacements sont commandés par une tige filetée (23) venant se visser dans le deuxième montant, à l'opposé de l'élément de raccord (8).

## Patentansprüche

1. Röhrenförmiges Verbindungselement (8), das ein radiales Dichtungslager (19) aufweist, welches zum Aufstecken auf eine röhrenförmige Verbindungsnase (25) bestimmt ist, wobei eine Dichtung (15) zwischengeschaltet ist, um eine dichte Verbindung zwischen dem Element (8) und der Nase (25) zu erhalten,
**dadurch gekennzeichnet, daß** es einen Dichtungshalter (26) umfaßt, der in einer zum Dichtungslager (19) parallelen Ebene so beweglich ist, daß er zwei aufeinanderfolgende Positionen einnehmen kann, nämlich:
- eine in bezug auf die Achse des Verbindungselementes (8) exzentrische Position, so daß eine Dichtung (15) in den Dichtungshalter (26) eingesetzt oder nach außerhalb der gegenüber dem Dichtungslager (19) liegenden Fläche aus diesem herausgenommen werden kann, und
- eine zentrierte Position, in der die zuvor eingesetzte Dichtung (15) gegen das Dichtungslager (19) koaxial zu dem Verbindungselement (8) zur Anlage kommt.

2. Verbindungselement nach Anspruch 1, **dadurch gekennzeichnet, daß** der Dichtungshalter (26) um eine Achse (30), die parallel zur Achse des Elementes (8) verläuft, verschwenkbar montiert und fest mit dem letztgenannten verbunden ist.

3. Verbindungselement nach Anspruch 2, **dadurch gekennzeichnet, daß** der Dichtungshalter (26) in Form eines flachen, ringförmigen Elementes vorliegt, dessen eine ebene Seitenfläche sich im wesentlichen in die Ebene des Dichtungslagers (19) erstreckt, während die Mittelöffnung (27) so ausgebildet ist, daß sie wenigstens teilweise die Dichtung (15) aufnimmt.

4. Verbindungselement nach Anspruch 3, **dadurch gekennzeichnet, daß** die Dichtung (15) die Form einer Scheibe mit zylindrischen Kanten aufweist und daß in diesem Fall die zylindrisch geformte Mittelöffnung (27) einen Durchmesser aufweist, der im wesentlichen dem Außendurchmesser der Dichtung (15) entspricht.

5. Verbindungselement nach Anspruch 4, **dadurch gekennzeichnet, daß** die Dichtungsscheibe (15) eine Dicke aufweist, die höchstens der des Dichtungshalters (26) entspricht.

6. Verbindungselement nach einem der vorhergehenden Ansprüche, **dadurch gekennzeichnet, daß** es eine zylindrische Innenfläche mit wenigstens zwei Bohrebenen, nämlich einer ersten Ebene (14), deren Durchmesser im wesentlichen dem Außendurchmesser der Dichtung (15) entspricht, und eine zweite Ebene (16) mit einem kleineren Durchmesser als die erste aufweist, die mit der letztgenannten über einen radialen Absatz verbunden ist, der das Dichtungslager (19) bildet, und ferner **dadurch gekennzeichnet, daß** der Dichtungshalter (26) in einen Querschlitz (31) gleicher Dicke eingreift, der in einem Verbindungselement (8) in einem Bereich unmittelbar benachbart dem Dichtungslager (19) ausgebildet ist.

7. Verbindungselement nach einem der vorhergehenden Ansprüche, **dadurch gekennzeichnet, daß** es in der Mittelöffnung eines ersten Vertikalstabes (2) eines Bügels (1) angeordnet ist, der zum Anschluß eines Gasversorgungskreises am Kopf (21) einer Druckgasflasche (22) verwendet wird.

8. Verbindungselement nach Anspruch 7, **dadurch gekennzeichnet, daß** der Bügel (1) einen starren, rechteckigen Rahmen mit zwei Vertikalstäben (2, 3) und zwei Querleisten (4, 5) sowie ein Gleitstück (20) aufweist, das von den zwei Querleisten (4, 5) geführt wird und dessen Verschiebungen von einer Schraubenspindel (23) gesteuert werden, die in den zweiten Bügel gegenüber dem Verbindungselement (8) eingeschraubt wird.

## Claims

1. A tubular connecting element (8) having a radial tight bearing surface (19) intended to be tightened onto a tubular connecting nozzle (25), with interposition of a tightness seal (15) with a view to obtaining a sealed connection between said element (8) and said nozzle (25),
**characterised in that** it comprises a seal holder (26) that is mobile in a plane parallel to said tight bearing surface (19) so as to be capable of occupying two successive positions, namely:
- a position offset in relation to the axis of the connecting element (8) in order to make it possible to insert a seal (15) into said seal holder (26) or remove one therefrom, outside of the space situated opposite said tight bearing surface (19), and
- a centred position in which the seal (15), which has been inserted previously, is arranged against the tight bearing surface (19) coaxially with the connecting element (8).

2. The connecting element as claimed in claim 1, **characterised in that** the seal holder (26) is mounted pivotal about an axis (30) parallel to the axis of said element (8) and integral therewith.

3. The connecting element as claimed in claim 2, **characterised in that** the seal holder (26) is in the form of a flat annular element of which one flat lateral side extends substantially in the plane of said tight bearing surface (19), whereas the central orifice (27) is shaped so as to at least partially contain the seal (15).

4. The connecting element as claimed in claim 3, **characterised in that** the tightness seal (15) is in the form of a washer with cylindrical edges and **in that**, in this instance, the cylindrically shaped central orifice (27) is of diameter substantially equal to the outside diameter of the seal (15).

5. The connecting element as claimed in claim 4, **characterised in that** the sealing washer (15) is of thickness that is at least equal to that of the seal holder (26).

6. The connecting element as claimed in any one of the previous claims, **characterised in that** it has a cylindrical inner surface with at least two bore levels, namely a first level (14) of diameter substantially equal to the outside diameter of the tightness seal (15), and a second level (16) of smaller diameter than the first level, which is connected to the latter by means of a radial flexure which constitutes the tight bearing surface (19), and **in that** the seal holder (26) fits into a transversal slot (31), of the same thickness, made in the connecting element (8), in a region directly adjacent to the tight bearing surface (19).

7. The connecting element as claimed in any one of the previous claims, **characterised in that** it is arranged in the central orifice of a first post (2) of a clamp (1) used to connect a gas distribution circuit to the top (21) of a pressurised cylinder of gas (22).

8. The connecting element as claimed in claim 7, **characterised in that** the clamp (1) comprises a rigid, rectangular frame comprising two posts (2, 3) and two cross-pieces (4, 5) as well as a slide-bar (20) guided by the two cross-pieces (4, 5) and of which the motion is controlled by a threaded rod (23) which is screwed into the second post, opposite the connecting element (8).
